# EUROPEAN PATENT SPECIFICATION

(11) **EP 2 794 229 B1**
(45) Date of publication and mention of the grant of the patent: **22.04.2020**
(21) Application number: 12858976.9
(22) Date of filing: 24.12.2012
(51) Int. Cl.: B29C 49/06, B29C 49/08, B29C 49/10, B29B 11/14, B29C 49/20, B29C 49/42, B29C 49/48, B29L 31/00

(54) **IN-MOULD HANDLE MOVEMENT MECHANISM**
BEWEGUNGSMECHANISMUS FÜR EINEN GRIFF IN EINER FORM
MÉCANISME DE MOUVEMENT DE POIGNÉE DANS UN MOULAGE

(30) Priority: 24.12.2011 AU 2011905444
(43) Date of publication of application: 29.10.2014
(73) Proprietor: B & R Industries Pty Ltd., Sydney, NSW 2000 (AU); Integrated Plastics Pty Limited, Villawood, NSW 2163 (AU)
(72) Inventor: BEALE, Glenn Robert, Kings Langley, NSW 2147 (AU)
(74) Representative: EP&C
(86) International application number: PCT/IB2012/002783
(87) International publication number: WO 2013/093610

(56) References cited:
- EP-A1- 2 011 627
- WO-A1-96/30189
- JP-A- H0 272 925
- US-A- 4 629 598
- US-A1- 2004 065 636
- US-A1- 2011 064 899

## Description

The present invention relates to injection stretch blow-moulded containers and, more particularly, to such containers formed of bi-axially oriented thermoplastic polymer.

### BACKGROUND

The process of injection stretch blow-moulding of thermoplastic polymer, in which an injection moulded perform is stretched both axially and radially in a blow moulding operation, results in a biaxial orientation of the polymer with increased tensile strength, less permeation due to tighter alignment of the molecular structure, high impact strength and transparency. As well, a container formed of polyethylene terephthalate (PET) is light in weight and lends itself to recycling.

Attempts have been made to incorporate integral handles in PET and like injection stretch blow moulding containers. A successful process developed by the present applicant is disclosed in for example WO1999/030883. While this process produces a satisfactory handle, the process employed cannot biaxially stretch the material of the handle nor consequently to any degree the region between the connection points of the handle to the preform. To achieve the required strength of the handle requires a form which is less pleasing aesthetically and is expensive in the amount of polymer required in its formation.

Other attempts at including an integrally connected handle in stretch blow-moulded containers are known. Thus Thibodeau in US2011/0064899 discloses a preform with an integral handle which is stretched and blown into a container with an integral handle. It appears however that the handle as injection moulded for the perform is not retained in that form in the blown container as can be seen from Figures 1, 1c and 2. Said document discloses in particular an in-mould, handle movement mechanism for repositioning and deforming a handle of a stretch blow-moulded container from its initial, as injected moulded location on a body of an injection moulded preform, to a desired integrally attached position on said stretch blow-moulded container, wherein said mechanism comprises a channel, said handle portion of said preform nesting in said channel when a said preform is introduced into said stretch blow-moulding die.

WO199630189 also discloses a method of producing a stretch blow-moulded container from a perform with an integral handle but one which is only connected to the preform at one location with the unconnected end partly enveloped but not integral with the blown container.

US2001/0065636A1 discloses a blown container with a handle located in a recess in the side of the container. Although blown from a parison or preform, there is no description of a preform which is injection moulded with an integrally attached handle and it appears the handle of the blown container is formed only in the stretch blow-moulding stage.

Similarly, JP H02 72925A does not disclose a perform which includes an integrally moulded handle. The handle provided in this disclosure is in the form of an aperture forced into existence only during the blow moulding process by the insertion into the blow moulding die of two aperture forming members.

It is an object of the present invention to address or at least ameliorate some of the above disadvantages.

### NOTES

The term "comprising" (and grammatical variations thereof) is used in this specification in the inclusive sense of "having" or "including", and not in the exclusive sense of "consisting only of".

The above discussion of the prior art in the Background of the invention, is not an admission that any information discussed therein is citable prior art or part of the common general knowledge of persons skilled in the art in any country.

In this specification, the term "perform" refers to an injection moulded article, also known in the industry as a "parison", from which a container is formed by the process of stretch blow-moulding.

### BRIEF DESCRIPTION OF INVENTION

Accordingly, in a first broad form of the invention, there is provided in-mould, handle movement mechanism according to claim 1.

Said mechanism comprises two mirror reversed said insert portions, each insert portion inserted into one half of said stretch blow-moulding die.

Preferably, said handle portion of said injection moulded preform comprises a central section having a generally flattened elliptical cross section and thickened sections adjacent each first and second junction point of said handle portion with a tubular body portion of said preform.

Preferably, said thickened sections are bifurcated sections of said handle portion.

Preferably, outer ends of each of said first fixed section and said pivoting block are formed as bifurcated channels; said thickened bifurcated sections of said handle portion adapted to nest in said bifurcated channels.

Said pivoting block is rotated between a first initial position conforming to said handle as injection moulded with said preform, and a second position; rotation of a pivoting block effected by a linkage connection to a linear actuator.

Preferably, rotation of said pivoting block is monitored by a sensor.

An outer surface of said forming block is flush with outer surfaces of said main block of said insert portion and of said pivoting block.

Preferably, said pivoting block commences rotation from said initial position as axial stretching of said preform occurs in said stretch blow-moulding die; said second junction point moving from its initial preform position towards its position on said container.

Preferably, said channel is formed so that substantially all sections of said handle portion experience movement as said pivoting block rotates from said first initial position towards said position on said container; said movement inducing biaxial orientation of polymer material forming said handle portion.

In another broad form of the invention, there is provided method of moving a handle portion according to claim 8.

Preferably, said movement of said handle portion junction point from said initial position to said junction point of said handle portion on said container cause biaxial orientation of polymer material of said handle portion.

Preferably, polymer material of a tubular body portion of said injection moulded preform and said handle are subjected to movement during said stretch blow-moulding cycle such that substantially all of said container body and said handle are biaxially oriented.

Preferably, said handle portion comprises a strap portion having a generally flattened elliptical section; said strap portion extending substantially the length of said handle portion.

Preferably, said strap portion extends between thickened portions adjacent each of said first and second junction points.

Preferably, said thickened portions are bifurcated such that each junction point comprises two areas of connection between said container and said handle.

### BRIEF DESCRIPTION OF DRAWINGS

Embodiments of the present invention will now be described with reference to the accompanying drawings wherein:
Figure 1 is a side view of an injection blow-moulded container with integral handle according to prior art.
Figure 2 is a side view of an injection moulded preform with integral handle portion,
Figure 3 is a composite side view of the preform of Figure 2 and a container stretch blow moulded from the preform, showing the movement of the handle,
Figure 4 is a perspective view of one half of the in-mould handle movement mechanism according to a preferred embodiment of the invention, in a first operating position,
Figure 5 is a perspective view of the one half of the in-mould handle movement mechanism of Figure 4, in a second operating position,
Figure 6 is a side view of the mechanism of Figures 3 and 4 shown in the position of Figure 4,
Figure 7 is a side view of the mechanism of Figures 3 and 4 shown in the position of Figure 5,
Figure 8 is a general view of the preform and blown container of Figures 1 and 2 in the cavity of the blow moulding die and shows the handle movement mechanism insert with the handle in its initial and final positions.

### DETAILED DESCRIPTION OF PREFERRED EMBODIMENTS

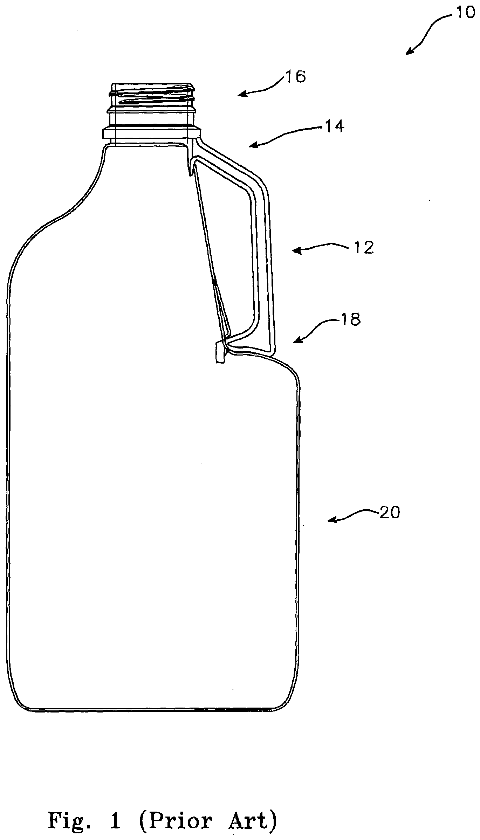

Figure 1 shows an injection stretch blow-moulded container 10 with an integral handle 12 attached at a first junction point 14 below the neck portion 16 and at a second junction point 18 to the body 20 of the container. The handle has retained essentially the same shape as it had when injection moulded with the preform from which the container was blown, so that the material of the handle has not been subjected to biaxial orientation. To make the handle sufficiently strong, it has in this example of the prior art, been formed as an "I" beam in section.

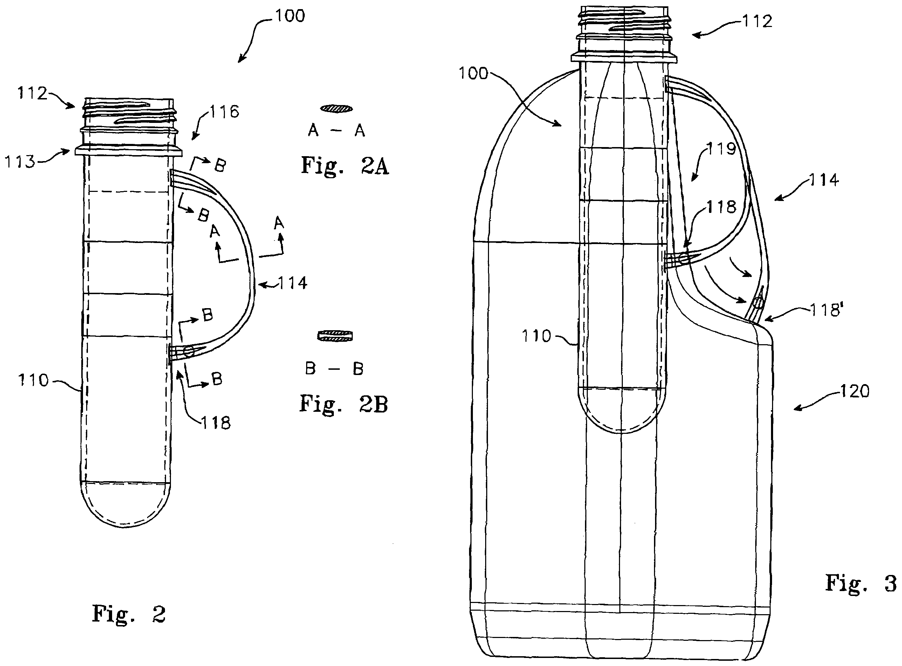

The preform 100 shown in Figure 2, is conventionally injection moulded in a process well known in the art. The preform 100, for use with the mechanism of the present invention, comprises a tubular body 110 depending from a threaded neck portion 112 and provided with a handle portion 114. Handle portion 114, which has been injection moulded along with the tubular body and is thus integral to, or one of a piece and homogenous with it, is joined to the tubular body 110 at a first junction point 116 just below the neck portion 112, and at a second junction point 118 lower down on the tubular body 110.

Preferably, the handle portion 114 is in the form of a narrow strap of a generally flattened elliptical section A-A as shown in Figure 2A along most of its length, but is thickened and bifurcated proximate both first junction point 116 and second junction point 118, as shown as section B-B in Figure 2B. Thus preferably each junction point comprises two, slightly spaced apart connections to the preform, and subsequently to the container.

Typically, an injection stretch blow-moulding process is a two stage process with the injection moulding of the preform being separated both in time and place from the subsequent stretch blow-moulding phase. In that case the preform must be preheated before it is introduced into the stretch blow-moulding die.

Only those portions of the preform 100 that are to be stretched and blown are heated, with the neck portion 112 shielded during the heating process. With the preform of Figure 2 for use with the handle moving mechanism of the invention, the preheating of the preform 100 is carefully controlled with shielding and air flow arranged to differentially preheat various areas of the preform. This precision preheating allows expansion of different sections of the preform to proceed at different rates to achieve the particular requirements of the handle moving operation.

Figure 3 shows the original preform 100 (as it was injection moulded and shown in Figure 2), and the container 120 after the blow-moulding process and handle movement. It can be seen that the position of the second junction point 118 on the preform 100, has moved to a new position 118' on the blown container 120. The flow of the preform material, at and adjacent the second junction point 118, preconditioned by the preheating, and as a result of the blowing process and control of the mechanism, ensures the second junction point 118' is located at the desired position on the container 120.

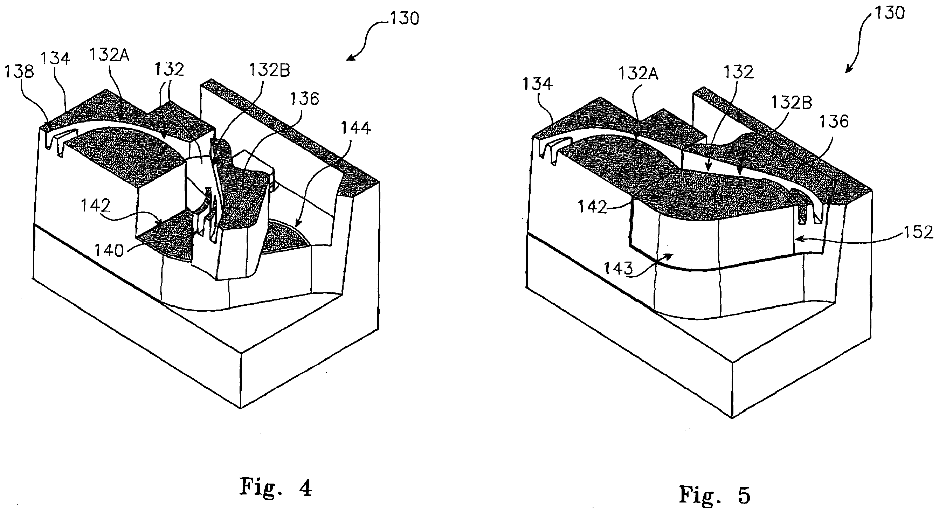

The mechanism for moving the handle to the position 118' as shown in Figure 3, will now be described with reference to Figures 4 to 7. The object 130, shown in these Figures, is one of two inserts comprising the mechanism, each insert being the mirror reverse of the other so that the corresponding opposing surfaces of the second insert (not shown) matches and is brought into close contact with the outer surfaces (indicated by shading in Figure 4 to 7) of the illustrated insert.

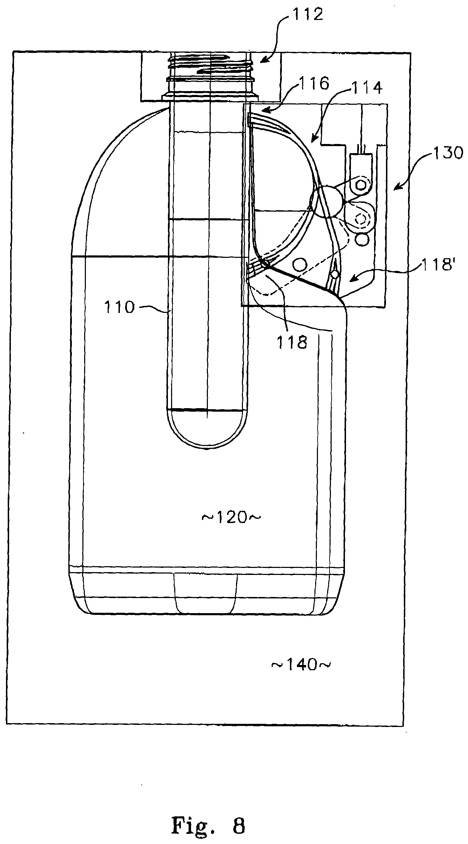

These halves of the mechanism are inserted into each respective half 140 of the blow moulding die (as shown in Figure 8) with the outer surfaces flush with the facing surfaces the two die halves. The inserts are so placed that the channel 132 is coincident with the handle portion 114 of the preform 100 when this is placed in the blow-moulding die in preparation for the stretch blow-moulding phase. Although the following description is with reference to just one of these inserts of the mechanism of the invention, it will be understood that the two inserts operate in concert during the mould cycle.

It can be seen that the channel 132 into which the handle portion 114 of the preform 100 is nested, is comprised of a fixed section 132A machined into the main insert block 134 and a pivoting section 132B formed in a pivoting block 136. The bifurcated portions at the first and second junction points 116 and 118 respectively are captured in the corresponding bifurcated sections 138 and 140 at the respective outer ends of fixed section 132A and the pivoting section 132B of the channel 132.

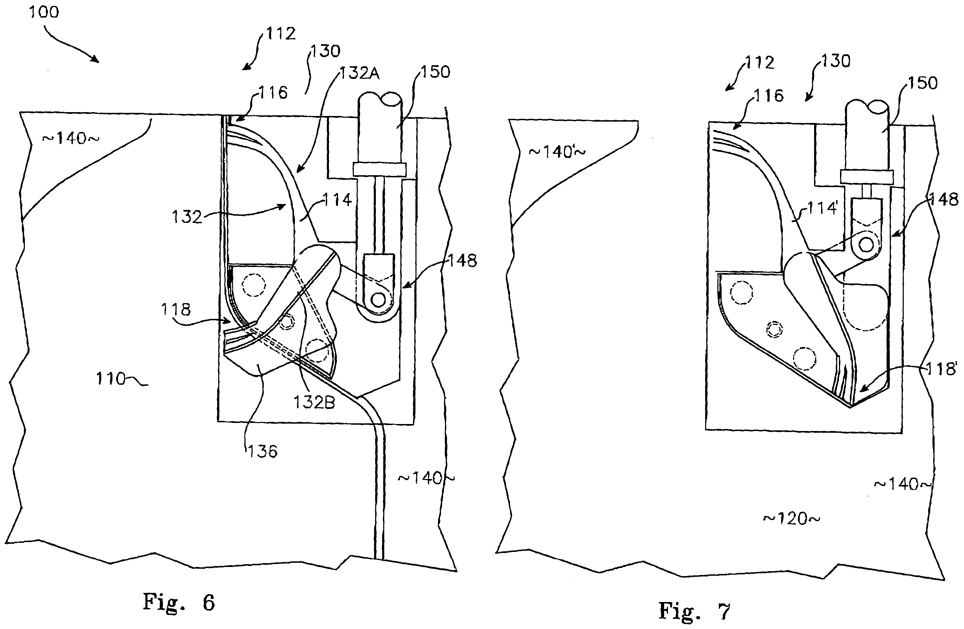

Lying immediately below the pivoting block 136, is a forming block 142, nested in a recess 144 of the main insert block 134. Forming block 142 is guided in the direction normal to the upper surfaces (shaded surfaces) of the main insert block 134 and pivoting block 136. Once the pivoting block 136 has sufficiently rotated towards its position shown in Figures 5 and 7, the forming block 142 can be driven from its nested retracted position shown in Figure 4 into a position where its upper surface 146 is then flush with the upper surfaces of the main insert and pivoting blocks, as shown in Figure 5. The forming block 142 provide a side surface 143 to complete the contour surface of the container forming cavity of that half of the stretch blow moulding die.

At the commencement of the stretch blow-moulding cycle, the preform 100 is mechanically stretched axially. Some air is also introduced into the preform at this stage. Simultaneously, the pivot block 136 begins its rotation from the initial position shown in Figure 4 and 5 towards its end of cycle position shown in Figures 5 and 7, drawing the softened preheated material of the preform around the second junction point along with the captured handle junction point.

As soon as the pivot block 136 reaches a predetermined point nearing the end of its rotation, as detected by a sensor (not shown), the forming block 142 is driven into the position shown in Figure 5 and the main air injection for the blow moulding takes place to form the container 120 shown in Figures 3 and 8.

Pivoting block 136 is operated by a linkage 148 and a linear actuator such as a pneumatic cylinder 150 shown in Figures 6 and 7. As well, pivoting block 136 may be urged and locked into its final blow-moulding position shown in Figures 5 and 7 by the sloping shoulder 152 of the out-stroking forming block 142.

It can be seen from the disposition and shape of the handle portion 114 as injection moulded and shown in position in the channel 132 in Figure 6, and its subsequent disposition and shape 114' as shown in Figure 7, that considerable movement has occurred of the handle portion 114, as well as the region 119 between the handle portion first and second junction points 116 and 118'. Movement is apparent, adjacent to both the thickened and bifurcated ends of the handle portion, as well as of the central strap section. This movement ensures biaxial orientation of the polymer and provides great strength to the handle, which is integrally attached to the blown container 120 as it was to the preform 100.

It will thus be apparent that, apart from the neck portion 112 and a small section of the preform just below the location ring 113 of the neck portion, all of the preform 100 is subjected to extensive movement of the polymer material, including the area between the first and second junction points of the handle portion, which now also becomes biaxially oriented. This area was subject to virtually no movement and little or no biaxial orientation in the container of the prior art as disclosed by the applicant in earlier patents. Thus this area was one of relative weakness.

The biaxial orientation which is inherent in the handle movement provided by the mechanism of the invention, provides a handle which is not only aesthetically pleasing and very strong, but also provides a very significant material saving over the non-biaxially oriented handle of the prior art.

The above describes only some embodiments of the present invention and modifications, obvious to those skilled in the art, can be made thereto without departing from the scope of the present invention.

## Claims

1. An in-mould, handle movement mechanism for repositioning a handle of a stretch blow-moulded container (120) from its initial, as injected moulded location (118) on a body of an injection moulded preform (100), to a desired integrally attached position (188¹) on said stretch blow-moulded container (120), wherein said mechanism comprises two mirror reversed insert portions (130), each insert portion inserted into one half (140) of a stretch blow-moulding die,
wherein each said insert portion is provided with a channel (132); said channel being adapted such that said handle portion of said preform can nest in said channel (132) when a said preform (100) is introduced into said stretch blow-moulding die,
wherein said channel (132) comprises a first fixed section (132A) located in a main block of said insert portion,
and a second pivoting section (132B) formed in a pivoting block (136) of said insert portion,
wherein said second pivoting section is rotatable between a first initial position conforming to said handle as injection moulded with said preform, and a second position; rotation of said pivoting block (136) effectable by a linkage connection (148) to a linear actuator,
wherein each said insert portion is further provided with a forming block (142); said forming block (142) moveable between a retracted nested position below said second pivoting block and an extended position at which an outer surface of said forming block is flush with outer surfaces of said main block of said insert portion and of said pivoting block, and
wherein said forming block (142) when in said extended position completes a contour surface of the container forming cavity of said stretch blow- moulding die.

2. The mechanism of claim 1, wherein the channel is adapted such that a handle portion (114) of said injection moulded preform (100) said handle portion (114) comprising a central section having a generally flattened elliptical cross section and thickened sections adjacent each first and second junction point (116 and 118') of said handle portion (114) with a tubular body portion of said preform (100) can nest in said channel when a said preform is introduced into said stretch blow-moulding die.

3. The mechanism of claim 2, wherein said thickened sections are bifurcated sections of said handle portion (114).

4. The mechanism of claim 3, wherein outer ends of each of said first fixed section and said second pivoting section are formed as bifurcated channels; said thickened bifurcated sections of said handle portion (114) adapted to nest in said bifurcated channels.

5. The mechanism of claim 1, further comprising a sensor for monitoring a rotation of said pivoting block (136).

6. The mechanism of any one of claims 2-5, wherein said pivot block (136) is suitable to commence rotation from said initial position as axial stretching of said preform (100) occurs in said stretch blow-moulding die;
said second junction point moving from its initial preform position towards its position on said container (120).

7. The mechanism of claim 6, wherein said channel (132) is formed so that substantially all sections of said handle portion (114) are suitable to experience movement as said pivot block (136) rotates from said first initial position towards said position on said container (120); said movement inducing biaxial orientation of polymer material forming said handle portion (114).

8. A method of moving a handle portion (114) from a disposition relative an injection moulded preform (100) to a desired disposition relative to a container (120) using the mechanism according to claim 1; said container (120) stretch blow-moulded from said preform; said steps including:
(a) inserting one half of a handle moving mechanism into each half of a stretch blow-moulding die,
(b) inserting a pre-heated injection moulded preform (100) comprising a tubular body portion (110) and handle portion (114) into said stretch blow-moulding die such that said handle portion (114) is nested in channels provided in each half of said mechanism when said die is closed for a mould cycle,
(c) stretching said preform axially while rotating a pivot block (136) in each said mechanism from an initial position conforming to said injection moulded handle portion (136), to move a junction point of said handle portion (136) with said preform, to a junction point of said handle portion (136) and said container.

9. The method of claim 8, wherein said movement of said handle portion junction point from said initial position to said junction point of said handle portion (114) on said container (120) cause biaxial orientation of polymer material of said handle portion.

10. The method container of claim 9, wherein polymer material of said tubular body portion and said handle (12) are subjected to movement during said stretch blow-moulding cycle such that substantially all of said container body (20) and said handle (12) are biaxially oriented.

11. The method of claim 9 or 10, wherein said handle portion (114) comprises a strap portion having a generally flattened elliptical section; said strap portion extending substantially the length of said handle portion.

12. The method of claim 11, wherein said strap portion extends between thickened portions adjacent each of said first and second junction points.

13. The method of claim 12, wherein said thickened portions are bifurcated such that each junction point comprises two areas of connection between said container and said handle (12).

## Patentansprüche

1. Bewegungsmechanismus für einen Griff in einer Form, um einen Griff eines streckgeblasenen Behälters (120) von seiner anfänglichen spritzgegossenen Stelle (118) auf einem Körper einer Spritzguss-Vorform (100) zu einer erwünschten integral angebrachten Position (188¹) auf dem streckgeblasenen Behälter (120) neu zu positionieren,
wobei der Mechanismus zwei spiegelverkehrte Einsatzabschnitte (130) umfasst,
wobei jeder Einsatzabschnitt in eine Hälfte einer Streckblasform eingesetzt ist,
wobei jeder Einsatzabschnitt mit einem Kanal (132) versehen ist; wobei der Kanal ausgestaltet ist, so dass der Griffabschnitt der Vorform in den Kanal (132) eingeschoben werden kann, wenn die Vorform (100) in die Streckblasform eingeführt wird,
wobei der Kanal (132) einen ersten festen Abschnitt (132A), welcher in einem Hauptblock des Einsatzabschnitts angeordnet ist, und einen zweiten Schwenkabschnitt (132B), welcher in einem Schwenkblock (136) des Einsatzabschnitts ausgebildet ist, umfasst,
wobei der zweite Schwenkabschnitt drehbar zwischen einer ersten anfänglichen Position, welche mit dem Griff spritzgegossen mit der Vorform übereinstimmt, und einer zweiten Position drehbar ist; wobei die Drehung des Schwenkblocks (136) durch eine Koppelverbindung (148) zu einer linearen Betätigungsvorrichtung durchführbar ist,
wobei jeder Einsatzabschnitt darüber hinaus mit einem Formblock (142) versehen ist; wobei der Formblock (142) zwischen einer zurückgezogenen eingeschobenen Stellung unter dem zweiten Schwenkblock und einer ausgestreckten Stellung, bei welcher eine Außenfläche des Formblocks bündig mit Außenflächen des Hauptblocks des Einsatzabschnitts und des Schwenkblocks ist, bewegbar ist, und wobei der Formblock (142), wenn er sich in der ausgestreckten Stellung befindet, eine Konturoberfläche des Behälter bildenden Hohlraums der Streckblasform vervollständigt.

2. Mechanismus nach Anspruch 1, wobei der Kanal ausgestaltet ist, so dass ein Griffabschnitt (114) der Spritzguss-Vorform (100),
wobei der Griffabschnitt (114) einen mittigen Abschnitt umfasst, welcher einen im Allgemeinen abgeflachten elliptischen Querschnitt und verdickte Abschnitte benachbart zu jeweils einem ersten und einem zweiten Verbindungspunkt (116 und 118') des Griffabschnitts (114) aufweist, wobei ein röhrenförmiger Körperabschnitt der Vorform (100) in den Kanal eingeschoben sein kann, wenn die Vorform in die streckgeblasene Form eingeführt ist.

3. Mechanismus nach Anspruch 2, wobei die verdickten Abschnitte gabelförmige Abschnitte des Griffabschnitts (114) sind.

4. Mechanismus nach Anspruch 3, wobei Außenenden von jeweils dem ersten festen Abschnitt und dem zweiten Schwenkabschnitt als gabelförmige Kanäle ausgebildet sind; wobei die verdickten gabelförmigen Abschnitte des Griffabschnitts (114) ausgestaltet sind, um in die gabelförmigen Kanäle eingeschoben zu werden.

5. Mechanismus nach Anspruch 1, darüber hinaus einen Sensor umfassend, um eine Drehung des Schwenkblocks (136) zu verfolgen.

6. Mechanismus nach einem der Ansprüche 2-5, wobei der Schwenkblock (136) geeignet ist, um eine Drehung von der anfänglichen Position, wenn ein axiales Streken der Vorform (100) in der Streckblasform auftritt, einzuleiten;
wobei sich der zweite Verbindungspunkt von seiner anfänglichen Vorformposition zu seiner Position auf dem Behälter (120) bewegt.

7. Mechanismus nach Anspruch 6, wobei der Kanal (132) ausgebildet ist, so dass im Wesentlichen alle Abschnitte des Griffabschnitts (114) geeignet sind, um eine Bewegung zu erfahren, wenn sich der Schwenkblock (136) von seiner ersten anfänglichen Position zu der Position auf dem Behälter (120) dreht;
wobei die Bewegung eine zweiachsigen Ausrichtung des Polymermaterials, welches den Griffabschnitt (114) ausbildet, veranlasst.

8. Verfahren zum Bewegen eines Griffabschnitts (114) von einer Disposition relativ einer Spritzgussvorform (100) zu einer erwünschten Disposition relativ zu einem Behälter (120), wobei der Mechanismus nach Anspruch 1 eingesetzt wird; wobei der Behälter (120) von der Vorform streckgeblasen wird; die Schritte aufweisend:
(a) Einführen einer Hälfte eines Griffbewegungsmechanismus in jede Hälfte einer Streckblasform,
(b) Einführen einer vorerhitzten Spritzguss-Vorform (100), welche einen röhrenförmigen Körperabschnitt (110) und einen Griffabschnitt (114) umfasst, in die Streckblasform, so dass der Griffabschnitt (114) in Kanäle eingeschoben wird, welche in jeder Hälfte des Mechanismus vorhanden sind, wenn die Form für einen Formungszyklus geschlossen ist,
(c) Strecken der Vorform axial, während sich ein Schwenkblock (136) in jedem Mechanismus von einer anfänglichen Position, welche mit dem Spritzguss-Griffabschnitt (136) übereinstimmt, dreht, um einen Verbindungspunkt des Griffabschnitts (136) mit der Vorform zu einem Verbindungspunkt des Griffabschnitts (136) und des Behälters zu bewegen.

9. Verfahren nach Anspruch 8, wobei die Bewegung des Griffabschnitt-Verbindungspunkts von der anfänglichen Position zu dem Verbindungspunkt des Griffabschnitts (114) auf dem Behälter (120) eine zweiachsige Ausrichtung eines Polymermaterials des Griffabschnitts bewirkt.

10. Verfahren nach Anspruch 9, wobei Polymermaterial des röhrenförmigen Körperabschnitts und des Griffs (12) während des Streckblaszyklus einer Bewegung ausgesetzt sind, so dass im Wesentlichen alles von dem Behälterkörper (20) und von dem Griff (12) zweiachsig ausgerichtet ist.

11. Verfahren nach Anspruch 9 oder 10, wobei der Griffabschnitt (114) einen Gurtabschnitt umfasst, welcher einen im Wesentlichen abgeflachten elliptischen Abschnitt aufweist; wobei sich der Gurtabschnitt im Wesentlichen entlang der Länge des Griffabschnitts erstreckt.

12. Verfahren nach Anspruch 11, wobei sich der Gurtabschnitt zwischen verdickten Abschnitten benachbart jeweils zu dem ersten und dem zweiten Verbindungspunkt erstreckt.

13. Verfahren nach Anspruch 12, wobei die verdickten Abschnitte gabelförmig sind, so dass jeder Verbindungspunkt zwei Bereiche einer Verbindung zwischen dem Behälter und dem Griff (12) umfasst.

## Revendications

1. Mécanisme de mouvement de poignée en moule pour repositionner une poignée d'un récipient moulé par soufflage avec étirage (120) depuis son emplacement initial (118) tel que moulé par injection sur un corps d'une préforme moulée par injection (100) jusqu'à une position fixée de manière solidaire (188¹) souhaitée sur ledit récipient moulé par soufflage avec étirage (120),
dans lequel ledit mécanisme comprend deux parties d'insert inversées en miroir (130), chaque partie d'insert étant insérée dans une moitié (140) d'une matrice de moulage par soufflage avec étirage,
dans lequel chacune desdites parties d'insert est prévue avec un canal (132); ledit canal étant adapté de sorte que ladite partie de poignée de ladite préforme peut s'emboîter dans ledit canal (132) lorsque ladite préforme (100) est introduite dans ladite matrice de moulage par soufflage avec étirage,
dans lequel ledit canal (132) comprend une première section fixe (132A) positionnée dans un bloc principal de ladite partie d'insert,
et une seconde section pivotante (132B) formée dans un bloc pivotant (136) de ladite partie d'insert,
dans lequel ladite seconde section pivotante peut tourner entre une première position initiale se conformant à ladite poignée telle que moulée par injection avec ladite préforme, et une seconde position; la rotation dudit bloc pivotant (136) pouvant être effectuée, par un raccordement de liaison (148), sur un actionneur linéaire,
dans lequel ladite partie d'insert est en outre prévue avec un bloc de formage (142); ledit bloc de formage (142) étant mobile entre une position emboîtée rétractée au-dessous dudit second bloc pivotant et une position étendue dans laquelle une surface externe dudit bloc de formage est de niveau avec les surfaces externes dudit bloc principal de ladite partie d'insert et dudit bloc pivotant, et
dans lequel ledit bloc de formage (142), lorsqu'il est dans ladite position étendue, complète une surface de contour de la cavité formant récipient de ladite matrice de moulage par soufflage avec étirage.

2. Mécanisme selon la revendication 1, dans lequel le canal est adapté de sorte qu'une partie de poignée (114) de ladite préforme moulée par injection (100), ladite partie de poignée (114) comprenant une section centrale ayant une section transversale elliptique généralement aplatie et des sections épaissies adjacentes à chaque premier et second point de jonction (116 et 118') de ladite partie de poignée (114) avec une partie de corps tubulaire de ladite préforme (100), peut s'emboîter dans ledit canal lorsque ladite préforme est introduite dans ladite matrice de moulage par soufflage avec étirage.

3. Mécanisme selon la revendication 2, dans lequel lesdites sections épaissies sont des sections bifurquées de ladite partie de poignée (114).

4. Mécanisme selon la revendication 3, dans lequel les extrémités externes de chacune parmi ladite première section fixe et ladite seconde section pivotante sont formées sous forme de canaux bifurqués; lesdites sections bifurquées épaissies de ladite partie de poignée (114) étant adaptées pour s'emboîter dans lesdits canaux bifurqués.

5. Mécanisme selon la revendication 1, comprenant en outre un capteur pour surveiller une rotation dudit bloc pivotant (136).

6. Mécanisme selon l'une quelconque des revendications 2 à 5, dans lequel ledit bloc pivotant (136) est approprié pour commencer la rotation à partir de ladite position initiale lorsque l'étirage axial de ladite préforme (100) a lieu dans ladite matrice de moulage par soufflage avec étirage;
ledit second point de jonction se déplaçant de sa position de préforme initiale vers sa position sur ledit récipient (120).

7. Mécanisme selon la revendication 6, dans lequel ledit canal (132) est formé de sorte que sensiblement toutes les sections de ladite partie de poignée (114) sont appropriées pour subir le mouvement lorsque ledit bloc pivotant (136) tourne de sa première position initiale vers ladite position sur ledit récipient (120);
ledit mouvement induisant l'orientation biaxiale du matériau polymère formant ladite partie de poignée (114).

8. Procédé pour déplacer une partie de poignée (114) d'une disposition par rapport à une préforme moulée par injection (100) jusqu'à une disposition souhaitée par rapport à un récipient (120) en utilisant le mécanisme selon la revendication 1; ledit récipient (120) étant moulé par soufflage avec étirage à partir de ladite préforme; lesdites étapes comprenant:
(a) insérer une moitié d'un mécanisme de déplacement de poignée dans chaque moitié d'une matrice de moulage par soufflage avec étirage,
(b) insérer une préforme moulée par injection préchauffée (100) comprenant une partie de corps tubulaire (110) et la partie de poignée (114) dans ladite matrice de moulage par soufflage avec étirage de sorte que ladite partie de poignée (114) est emboîtée dans des canaux prévus dans chaque moitié dudit mécanisme lorsque ladite matrice est fermée pendant un cycle de moule,
(c) étirer ladite préforme axialement tout en faisant tourner un bloc de pivot (136) dans chacun desdits mécanismes à partir d'une position initiale se conformant à ladite partie de poignée (136) moulée par injection, afin de déplacer un point de jonction de ladite partie de poignée (136) avec ladite préforme, jusqu'à un point de jonction de ladite partie de poignée (136) et dudit récipient.

9. Procédé selon la revendication 8, dans lequel ledit mouvement dudit point de jonction de partie de poignée de ladite position initiale jusqu'audit point de jonction de ladite partie de poignée (114) sur ledit récipient (120) provoque l'orientation biaxiale du matériau polymère de ladite partie de poignée.

10. Procédé selon la revendication 9, dans lequel le matériau polymère de ladite partie de corps tubulaire et ladite poignée (12) sont soumis au mouvement pendant ledit cycle de moulage par soufflage avec étirage de sorte que sensiblement la totalité dudit corps de récipient (20) et ladite poignée (12) sont orientées de manière biaxiale.

11. Procédé selon la revendication 9 ou 10, dans lequel ladite partie de poignée (114) comprend une partie de bride ayant une section elliptique généralement aplatie; ladite partie de bride s'étendant sensiblement sur la longueur de ladite partie de poignée.

12. Procédé selon la revendication 11, dans lequel ladite partie de bride s'étend entre les parties épaissies adjacentes à chacun desdits premier et second points de jonction.

13. Procédé selon la revendication 12, dans lequel lesdites parties épaissies sont bifurquées de sorte que chaque point de jonction comprend deux zones de raccordement entre ledit récipient et ladite poignée (12).
